# FASCICULE DE BREVET EUROPEEN

(11) **EP 3 304 775 B1**
(45) Date de publication et mention de la délivrance du brevet: **30.06.2021**
(21) Numéro de dépôt: 16726559.4
(22) Date de dépôt: 31.05.2016
(51) Int. Cl.: H04H 20/10, H04H 20/67

(54) **PROCEDE DE TRAITEMENT D'UN FLUX GLOBAL D'ORIGINE COMPRENANT AU MOINS UN TUNNEL COUCHE PHYSIQUE ENCAPSULANT UN FLUX DE TRANSPORT**
VERFAHREN ZUR VERARBEITUNG EINES GLOBALEN ORIGINALDATENSTROMS MIT MINDESTENS EINEM EINEN TRANSPORTDATENSTROM VERKAPSELNDEN TUNNEL AUF PHYSIKALISCHER EBENE
METHOD FOR PROCESSING AN ORIGINAL GLOBAL STREAM INCLUDING AT LEAST ONE PHYSICAL LAYER TUNNEL ENCAPSULATING A TRANSPORT STREAM

(30) Priorité: 01.06.2015 FR 1554936
(43) Date de publication de la demande: 11.04.2018
(73) Titulaire: Enensys Technologies, 35510 Cesson Sévigné (FR)
(72) Inventeur: LHERMITTE, Richard, 35000 Rennes (FR)
(74) Mandataire: Vidon Brevets & Stratégie
(86) Numéro de dépôt international: PCT/EP2016/062295
(87) Numéro de publication internationale: WO 2016/193269

(56) Documents cités:
- FR-A1- 2 932 037
- FR-A1- 2 963 864
- TOMMY JENSEN: "LOCAL CONTENT IN DVB-T2 SYSTEMS WITH SFN", INTERNATIONAL BROADCASTING CONFERENCE 2012; 12-9-2012 - 17-9-2012; AMSTERDAM,, 12 septembre 2012 (2012-09-12), XP030082400,

## Description

### 1. Domaine de l'invention

Le domaine de l'invention est celui de la diffusion d'informations, en particulier de la diffusion terrestre de services télévisuels, dans un réseau de diffusion comprenant une tête de réseau et une pluralité de sites de diffusion.

Plus précisément, l'invention concerne la modification d'un flux global (i.e. d'un flux comprenant un ou plusieurs tunnels couche physique encapsulant chacun un flux de transport), permettant notamment de remplacer un contenu principal porté par un flux de transport du flux global (par exemple des services télévisuels nationaux de type TF1®, France 2®, etc), par un contenu secondaire (par exemple un contenu local de type météo locale, journal local, publicité locale, etc).

L'invention s'applique notamment aux réseaux de diffusion terrestre conformes à la norme DVB-T2 (« Digital Video Broadcasting - Terrestrial » en anglais, pour «diffusion vidéo numérique terrestre») ou aux normes à venir.

En particulier, l'invention s'applique aux réseaux SFN (« Single Frequency Network » pour « réseau à fréquence unique »).

### 2. Art antérieur

Lors d'une diffusion numérique terrestre, l'ensemble des chaines associées à un multiplexe / une fréquence sont gérées de manière centralisée au niveau d'un équipement appelée communément tête de réseau (« head end »), afin de créer un signal unique pour tous les sites de diffusion (i.e. stations de ré-émission) implantés sur des sites géographiques distincts. Le chemin de distribution utilisé entre la tête de réseau et les sites de diffusion est généralement une liaison satellite, mais peut aussi être une liaison de type IP ou « micro ondes ».

La norme la plus utilisée actuellement pour diffuser la télévision numérique terrestre est la norme DVB-T. Cette norme est indépendante du format du contenu ; par exemple elle permet aussi bien de diffuser des services « normaux » que des services « Haute Définition ».

Une seconde version de la norme DVB-T, notée DVB-T2, offre encore plus d'efficacité en terme de diffusion, de couverture, de capacité de transport (débit) et de flexibilité.

Cette seconde version permet d'agréger au sein d'un même flux global plusieurs tunnels couche physique appelés PLP (« Physical Layer Pipe » en anglais). Chacun de ces tunnels couche physique est constitué d'un multiplexe de contenus dans un flux de transport de type MPEG-2 TS disposant de ses propres paramètres de modulation. Ces tunnels sont rassemblés au sein d'un flux global appelé flux T2-MI (« Modulator Interface » en anglais). Le flux T2-MI est lui-même encapsulé dans une nouvelle couche de type MPTS (« Multiple Program Transport Stream » en anglais). Le flux T2-MI comprend des paquets T2-MI, tels que : des paquets de synchronisation (« T2-MI timestamp »), des paquets de signalisation (dont le paquet nommé T2-MI L1 courant qui donne des informations sur la structure du flux T2-MI), et des paquets appelés trames bandes de base (« Baseband Frame » en anglais) contenant les données des flux MPEG-2 TS des différents tunnels. Les paquets T2-MI sont organisés en trames T2 (« T2-Frame » en anglais), chaque trame T2 comprenant un paquet T2-MI timestamp, un paquet T2-MI L1 courant et des paquets trames bandes de base.

Par ailleurs, dans le cadre d'une diffusion numérique terrestre, la technologie SFN est classiquement utilisée pour améliorer la couverture du territoire / d'une zone géographique et palier à des zones d'ombre liées à des éléments perturbateurs dans la transmission (montagne, collines, vallées, grands immeubles, ...). Elle permet également de réduire le nombre de fréquences utilisées, et par conséquent de libérer certaines plages de fréquences.

Cette technologie SFN, très efficace, implique une synchronisation parfaite des sites de diffusion entre eux, et une structure strictement identique du contenu à diffuser par les différents sites de diffusion.

On rappelle enfin qu'en télévision numérique terrestre, le décrochage permet de substituer à un contenu principal, comme un programme télévisé de couverture nationale sur France 3®, un contenu secondaire, comme un programme télévisé de couverture régionale sur France 3. On passe ainsi d'une diffusion par une tête de réseau nationale, diffusant le contenu principal, à un site de diffusion régional, diffusant le contenu secondaire.

La problématique du décrochage est bien connue dans le domaine de la diffusion de télévision numérique terrestre selon la norme DVB-T.

Il existe en revanche peu de techniques efficaces pour le décrochage dans le domaine de la diffusion de télévision numérique terrestre selon la norme DVB-T2, permettant notamment de garantir une diffusion SFN.

La demande de brevet FR2963864 A1 décrit un procédé pour remplacer au moins un tunnel d'un flux T2-MI national par un tunnel d'un flux T2-MI régional pour générer un flux T2-MI à émettre.

### 3. Exposé de l'invention

L'invention propose ainsi une nouvelle solution pour le remplacement de contenus, qui soit compatible avec la norme DVB-T2 ou d'autres normes de diffusion numérique terrestre, et qui, selon au moins un mode de réalisation, permette de garantir une diffusion SFN.

Pour ce faire, l'invention propose un procédé de traitement d'un flux global d'origine, délivrant un flux global modifié, selon lequel ledit flux global d'origine est émis par une tête de réseau et destiné à une pluralité de sites de diffusion, et comprend au moins un tunnel couche physique encapsulant un flux de transport.

Selon l'invention, un tel procédé met en œuvre les étapes suivantes :
- réception du flux global d'origine,
- pour au moins un tunnel couche physique du flux global d'origine, dit tunnel d'origine :
   - extraction du flux de transport encapsulé dans le tunnel d'origine, dit flux de transport d'origine,
   - obtention d'un flux de transport modifié, obtenu en remplaçant au moins un contenu principal porté par le flux de transport d'origine par au moins un contenu secondaire,
   - décalage temporel du flux global d'origine,
   - alignement d'au moins un paquet de référence du flux de transport modifié avec au moins un paquet de référence du flux global d'origine obtenu après décalage temporel, et
   - remplacement, dans le tunnel d'origine du flux global d'origine obtenu après décalage temporel, du flux de transport d'origine par le flux de transport modifié obtenu après alignement.

On obtient à l'issue de ces différentes étapes le flux global modifié.

L'invention propose ainsi une nouvelle solution pour le traitement d'un flux global, permettant de modifier un tel flux global, en vu du « décrochage » de services télévisuels.

Selon la solution proposée, un flux global est émis par une tête de réseau, à destination d'une pluralité de sites de diffusion. Un tel flux global est par exemple de type T2-MI selon la norme DVB-T2, ou équivalent. Un dispositif de traitement d'un flux global, localisé entre la tête de réseau et les sites de diffusion, par exemple au niveau de chaque site de diffusion ou au niveau de chaque région ou plaque SFN, reçoit le flux global d'origine, le modifie, et génère un flux global modifié.

Pour ce faire, un ou plusieurs flux de transport encapsulés dans le flux global d'origine sont extraits du flux global d'origine, et le ou les contenus principaux portés par ce ou ces flux de transport sont remplacés par des contenus secondaires. Le remplacement de contenu est donc mis en œuvre au niveau des flux de transport, et non du flux global. Après ré-encapsulation des flux de transport, le flux global reconstruit, encore appelé flux global modifié, présente une structure identique au flux global d'origine, en terme de nombre de paquets notamment, mais porte un contenu différent. En d'autres termes, une telle technique de traitement du flux global permet de dupliquer ou de reconstruire « à l'identique » un flux global, en terme de structure et de nombre de paquets, de façon déterministe, tout en permettant la modification du contenu. De cette façon, le remplacement de contenus est transparent pour le site de diffusion.

On note que les étapes de décalage temporel et d'alignement mises en œuvre préalablement au remplacement du flux de transport d'origine par le flux de transport modifié permettent de compenser le temps de traitement nécessaire à la modification de certains flux de transport.

En particulier, l'étape de décalage temporel du flux global d'origine permet de retarder le flux global d'origine, par exemple en le stockant en mémoire tampon, d'une durée au moins égale au temps de traitement nécessaire pour le remplacement de contenus au niveau des flux de transport.

Si l'on se place dans le contexte de la norme de diffusion DVB-T2, le flux global d'origine peut être retardé d'une durée correspondant au temps de traitement nécessaire au remplacement de contenus au niveau des flux de transport (par exemple de l'ordre de 100 ms), auquel on ajoute la période d'une trame T2 (par exemple de l'ordre de 250ms).

En particulier, si l'on se place dans le contexte de la norme de diffusion DVB-T2, le flux global d'origine et le flux global modifié sont de type T2-MI. Le flux global d'origine et le flux global modifié présentent une structure identique dans le sens où ils portent tous les deux les mêmes paquets de synchronisation, les mêmes paquets de signalisation, et le même nombre de trames bandes de base. Seules les données des flux de transport MPEG-2TS des différents tunnels diffèrent entre le flux global d'origine et le flux global modifié.

Une telle technique de traitement du flux global selon l'invention procure de nombreux avantages.

En particulier, la solution proposée ne nécessite pas la modification du flux global au niveau de la tête de réseau.

Ainsi, une telle technique de traitement du flux global permet d'éviter la duplication des contenus / service télévisuels lors de la diffusion de la tête de réseau vers les sites de diffusion, et donc une optimisation des liens de distribution. En particulier, l'invention permet d'éviter d'avoir autant de réseau de distribution que de régions / plaques SFN et est indépendante des chemins de distribution entre la tête de réseau et les sites de diffusion (satellite, IP, ...).

Comme la technique de traitement du flux global est mise en œuvre au niveau d'un dispositif de traitement du flux global associé à au moins un site de diffusion, elle offre une flexibilité dans l'architecture du réseau, avec la possibilité de gérer des contenus locaux dans différents sites de diffusion non liés entre eux.

Selon un mode de réalisation particulier, elle utilise la technologie DVB-T2 sans y ajouter de solution propriétaire. Elle est donc compatible avec toutes les configurations possibles du DVB-T2 (mono et multi-PLP, SFN, MISO, etc).

Selon au moins un mode de réalisation, la solution proposée permet l'insertion d'un contenu « local » sur un ou plusieurs services TV nationaux (décrochage local, publicité locale, etc), en utilisant par exemple la technologie de diffusion DVB-T2, tout en garantissant le mode SFN.

En effet, la « reconstruction » du flux global étant déterministe, la solution proposée permet de respecter les contraintes de synchronisation du mode SFN. Les différents sites de diffusion (i.e. stations de ré-émission) d'une plaque (i.e. cellule SFN) peuvent ainsi émettre exactement un signal synchronisé en fréquence et surtout en temps, avec une précision de l'ordre de 1 à 10 *µ*s.

En particulier, les paquets de référence utilisés pour la sous-étape d'alignement sont des paquets de signalisation, par exemple des tables PAT (« Program Association Table ») selon la norme DVB / DVB-T2.

En effet, de tels paquets de référence ne sont pas modifiés lors du remplacement de contenus dans un flux de transport modifié, et peuvent donc être utilisés pour aligner le flux de transport modifié sur le flux global d'origine encapsulant le flux de transport d'origine.

Selon un mode de réalisation particulier de l'invention, le procédé de traitement comprend une étape de mise à jour d'au moins un champ de contrôle dans le flux global modifié.

Si l'on se place dans le contexte de la norme de diffusion DVB-T2, de tels champs de contrôle, notés CRC, sont présents pour chaque paquet T2-MI. Selon ce mode de réalisation, les CRC des paquets T2-MI et les CRC des trames bande de base contenant les données des flux de transport modifiés sont mis à jour, de façon à tenir compte du remplacement de contenus.

Selon un premier mode de réalisation de l'invention, l'étape d'obtention met en œuvre la transmission du flux de transport d'origine à un équipement de remplacement de contenus mettant en œuvre le remplacement du ou des contenu principaux par un ou des contenus secondaires, et la réception du flux de transport modifié.

Par exemple, un tel équipement de remplacement est un produit existant pour le remplacement de contenus selon la norme de diffusion DVB-T, DVB-T2 ou équivalent, développé par un fournisseur d'équipements.

Selon un deuxième exemple, un tel équipement de remplacement met en œuvre le procédé de remplacement de contenus décrit dans la demande de brevet français n°1553260 déposée le 14/04/2015.

En effet, l'extraction des flux de transport à partir du flux global d'origine selon l'invention permet le remplacement de contenus au niveau des flux de transport (et non du flux global), ce qui permet l'utilisation d'équipements de remplacement de contenus développés selon la norme de diffusion DVB-T.

Selon un deuxième mode de réalisation de l'invention, l'étape d'obtention met en œuvre le remplacement du ou des contenus principaux par le ou les contenus secondaires.

En d'autres termes, c'est le dispositif de traitement du flux global lui-même qui met en œuvre le remplacement du ou des contenus principaux par le ou les contenus secondaires.

Pour ce faire, un tel dispositif met par exemple en œuvre le procédé de remplacement de contenus décrit dans la demande de brevet français n°1553260 précitée.

En particulier, un tel remplacement met en œuvre un remplacement d'au moins un paquet de données associées au contenu principal du flux de transport d'origine, par au moins un paquet de données associées au contenu secondaire (correspondant par exemple à un flux de transport local).

Dans un mode particulier de réalisation, les différentes étapes du procédé de traitement d'un flux global selon l'invention sont déterminées par des instructions de programmes d'ordinateurs.

En conséquence, l'invention vise aussi à protéger un programme d'ordinateur comportant des instructions adaptées à la mise en œuvre des étapes du procédé de traitement d'un flux global tel que décrit ci-dessus lorsque ce programme est exécuté par un processeur, ainsi qu'un support d'informations lisible par un ordinateur comportant des instructions d'un programme d'ordinateur tel que mentionné ci-dessus.

L'invention concerne également un dispositif de traitement d'un flux global correspondant.

Un tel dispositif est notamment adapté à mettre en œuvre le procédé de traitement d'un flux global décrit précédemment.

Un tel dispositif pourra bien sûr comporter les différentes caractéristiques relatives au procédé de traitement d'un flux global selon l'invention, qui peuvent être combinées ou prises isolément. Ainsi, les caractéristiques et avantages de ce dispositif sont les mêmes que ceux du procédé de traitement d'un flux global. Par conséquent, ils ne sont pas détaillés plus amplement.

Selon un mode de réalisation particulier de l'invention, le ou les contenus secondaires sont préalablement stockés dans le dispositif de traitement, ou dans un équipement de remplacement de contenus communiquant avec le dispositif de traitement.

En particulier, un tel dispositif peut être localisé au niveau de chaque région/plaque SFN (plusieurs sites de diffusion appartenant à une même plaque de type SFN), ou bien au niveau de chaque site de diffusion. Il s'agit par exemple d'un équipement de type T2-Edge® commercialisé par le Demandeur.

### 4. Liste des figures

D'autres caractéristiques et avantages de l'invention apparaîtront plus clairement à la lecture de la description suivante d'un mode de réalisation particulier, donné à titre de simple exemple illustratif et non limitatif, et des dessins annexés, parmi lesquels :
- la figure 1 présente les principales étapes d'un procédé de traitement d'un flux global selon un mode de réalisation particulier de l'invention ;
- les figures 2 et 3 illustrent deux exemples de réseaux de diffusion mettant en œuvre des dispositifs de traitement d'un flux global selon un mode de réalisation particulier de l'invention ;
- les figures 4A à 4E représentent respectivement un exemple de flux global d'origine, de flux de transport d'origine, de flux de transport modifié, d'alignement du flux de transport modifié sur le flux global d'origine, et de flux global modifié ;
- la figure 5 présente la structure simplifiée d'un dispositif de traitement d'un flux global selon un mode de réalisation particulier de l'invention.

### 5. Description d'un mode de réalisation de l'invention

### 5.1 Principe général

Le principe général de l'invention repose sur le traitement déterministe d'un flux global, émis par une tête de réseau et destiné à une pluralité de sites de diffusion, permettant de générer un flux global modifié présentant une structure identique au flux global d'origine, et dont le contenu est modifié par rapport au flux global d'origine.

La solution proposée repose sur l'extraction du ou des flux de transport encapsulés dans le flux global d'origine, le remplacement déterministe des contenus au niveau flux de transport, puis la reconstruction déterministe d'un flux global, dit flux global modifié, présentant une structure identique au flux global d'origine.

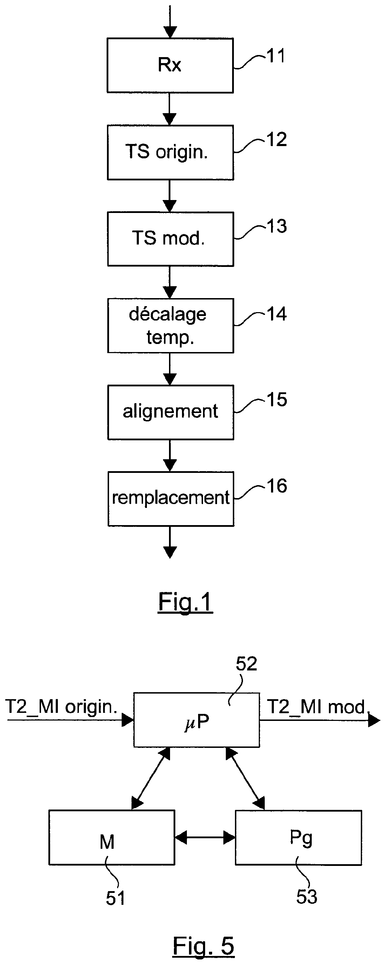

La figure 1 présente les principales étapes mises en œuvre pour le traitement d'un flux global selon un mode de réalisation de l'invention, permettant le remplacement d'au moins un contenu principal porté par un flux de transport d'un flux global d'origine (par exemple un service audio-vidéo national à remplacer) par au moins un contenu secondaire, éventuellement porté par un flux de transport « local » (par exemple une ou plusieurs publicités locales).

On entend ici par contenu principal ou contenu secondaire un contenu audiovisuel, comprenant au moins une composante, de type vidéo, audio et/ou de sous-titre. Chaque composante est transmise dans le flux de transport sous la forme de paquets multiplexés. Les paquets vidéo, audio, et/ou de sous-titre du contenu principal décrivent respectivement la composante vidéo, audio et/ou de sous-titre du contenu principal. Les paquets vidéo, audio ou de sous-titre du contenu secondaire décrivent respectivement la composante vidéo, audio et/ou de sous-titre du contenu secondaire.

On considère ci-après un flux global d'origine issu d'une tête de réseau et destiné à une pluralité de sites de diffusion (i.e. stations de ré-émission). Les étapes présentées en relation avec la figure 1 peuvent être mises en œuvre par un dispositif de traitement localisé entre la tête de réseau et au moins un des sites de diffusion.

Au cours d'une première étape 11, le dispositif de traitement reçoit le flux global d'origine. Un tel flux global d'origine comprend au moins un tunnel couche physique, chaque tunnel couche physique encapsulant un flux de transport.

Pour au moins un tunnel couche physique du flux global d'origine, dit tunnel d'origine, on extrait, au cours d'une deuxième étape 12, le flux de transport encapsulé dans ce tunnel d'origine. Le flux de transport ainsi extrait est nommé flux de transport d'origine.

On obtient, au cours d'une troisième étape 13, un flux de transport modifié, à partir du flux de transport d'origine. Un tel flux de transport modifié est obtenu en remplaçant au moins un contenu principal porté par le flux de transport d'origine par au moins un contenu secondaire, éventuellement porté par un flux de transport « local ». Un tel remplacement peut être mis en œuvre par le dispositif de traitement du flux global ou par un équipement de remplacement de contenus spécifique, conservant la structure du flux de transport, c'est-à-dire ne modifiant pas le nombre de paquet du flux de transport entre deux paquets de signalisation. Un tel dispositif de traitement ou équipement de remplacement réalise l'insertion de façon déterministe.

Le flux global d'origine est ensuite décalé temporellement au cours d'une quatrième étape 14, par exemple en le stockant en mémoire tampon, et le flux de transport modifié est aligné avec le flux global d'origine décalé temporellement au cours d'une cinquième étape 15, en alignant au moins un paquet de référence du flux de transport modifié avec au moins un paquet de référence du flux global d'origine décalé temporellement.

Au cours d'une sixième étape 16, un flux global modifié est reconstruit, en remplaçant le flux de transport d'origine par le flux de transport modifié dans le tunnel d'origine du flux global d'origine décalé temporellement. Le contenu du tunnel d'origine est modifié, puisque le tunnel d'origine encapsule désormais le flux de transport modifié.

Comme indiqué ci-dessus, un tel traitement peut être mis en œuvre par un dispositif de traitement localisé entre la tête de réseau et au moins un des sites de diffusion.

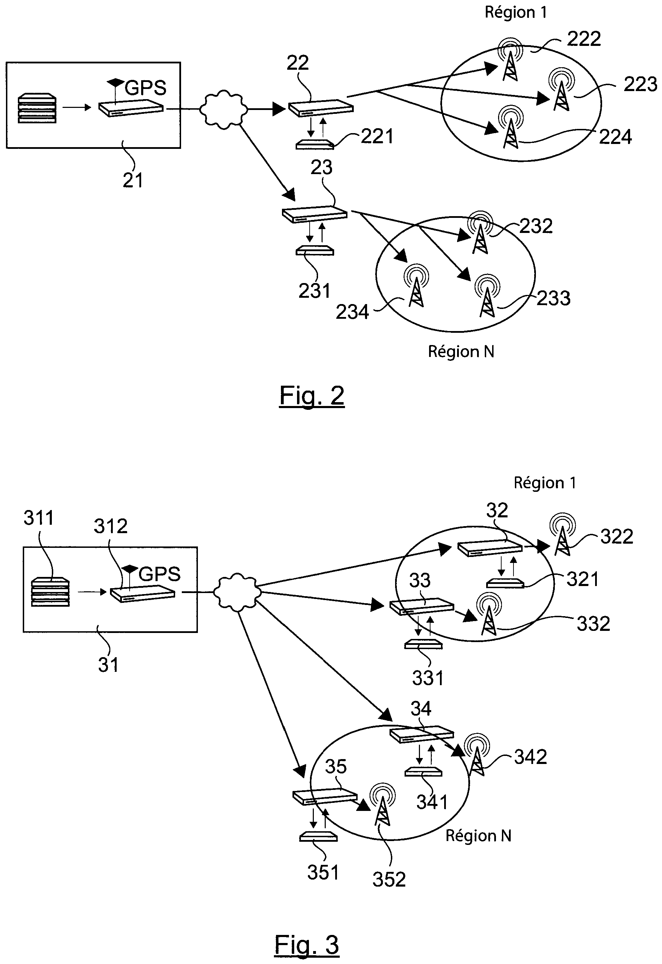

Les figures 2 et 3 illustrent deux exemples de réseaux de diffusion, comprenant un ou plusieurs dispositifs de traitement d'un flux global apte à mettre en œuvre le procédé de traitement décrit ci-dessus.

Selon un premier exemple, illustré en figure 2, le dispositif de traitement d'un flux global peut être localisé au niveau de chaque région / plaque SFN.

Selon ce premier exemple, la tête de réseau 21 génère un flux global d'origine et le diffuse aux dispositifs de traitement 22 et 23, par l'intermédiaire d'un chemin de distribution. Chaque dispositif de traitement 22, 23 peut être connecté à un serveur de contenus ou à une base de données stockant les contenus secondaires à diffuser, ou à un équipement de remplacement de contenus 221, 231 lui-même connecté à un serveur de contenus ou à une base de données stockant les contenus secondaires à diffuser. Le dispositif de traitement 22 (respectivement 23) reçoit le flux global d'origine, modifie le contenu d'au moins un flux de transport du flux global d'origine, et transmet le flux global modifié à un ou plusieurs sites de diffusion 222, 223, 224 (respectivement 232, 233, 234) implantés sur des sites géographiques distincts. Chaque site de diffusion comprend un récepteur et un réémetteur, qui peuvent éventuellement être combinés. On entend donc ici par « site de diffusion » un équipement ou système comprenant un récepteur suivi par un modulateur/émetteur ou intégré dans un modulateur/émetteur.

Selon un deuxième exemple, illustré en figure 3, le dispositif de traitement d'un flux global peut être localisé au niveau d'un site de diffusion.

Selon ce deuxième exemple, présentant de meilleures performances en termes de bande passante, la tête de réseau 31 génère un flux global d'origine et le diffuse aux dispositifs de traitement 32, 33, 34, et 35, par l'intermédiaire d'un chemin de distribution. Chaque dispositif de traitement 32, 33, 34, et 35 peut être connecté à un serveur de contenus ou à une base de données stockant les contenus secondaires à diffuser, ou à un équipement de remplacement de contenus 321, 331, 341, 351 lui-même connecté à un serveur de contenus ou à une base de données stockant les contenus secondaires à diffuser. Chaque dispositif de traitement (32, 33, 34, 35 respectivement) reçoit le flux global d'origine, modifie le contenu d'au moins un flux de transport du flux global d'origine, et transmet le flux global modifié au site de diffusion auquel il est associé (322, 332, 342, 352 respectivement). En particulier, le dispositif de traitement peut être intégré au site de diffusion auquel il est associé. Dans ce cas, le flux global modifié n'a pas à être transmis au site de diffusion. On rappelle que chaque site de diffusion est implanté sur un site géographique différent, et comprend au moins un récepteur suivi par un modulateur/émetteur ou intégré dans un modulateur/émetteur.

### 5.2 Exemple de mise en œuvre

On décrit ci-après un exemple de mise en œuvre de l'invention dans un réseau de diffusion selon la figure 3, comprenant une tête de réseau 31 et des dispositifs de traitement d'un flux global 32, 33, 34, 35 localisés au niveau de chaque site de diffusion 322, 332, 342, 352.

On se place également dans le contexte d'une norme de diffusion de type DVB-T2, selon laquelle flux global d'origine est de type T2-MI et chaque flux de transport est encapsulé dans un tunnel couche physique.

Selon cet exemple, la tête de réseau 31 fonctionne de manière classique, en agrégeant les contenus nationaux 311 et en créant, grâce à la passerelle T2 « T2 Gateway » 312, un flux global destiné à être acheminé vers tous les sites de diffusion. La passerelle T2 312 permet l'adaptation du contenu au format DVB-T2. Pour cela, entre autre, elle encapsule les contenus nationaux dans un flux global T2-MI, afin de pouvoir les transporter jusqu'aux sites de diffusion. Elle insère aussi les informations relatives à la mise en place du réseau SFN (paquets de synchronisation SFN, par exemple de type « DVB-T2 TimeStamp », encore notés « T2-MI timestamp »).

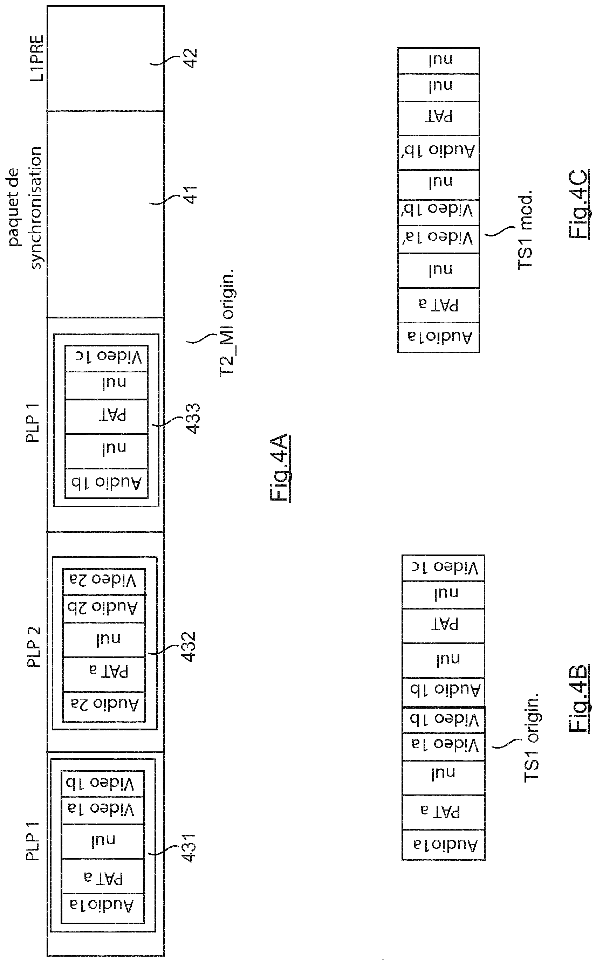

La figure 4A illustre un exemple de flux global d'origine, noté T2-Mlorigin, issu de la tête de réseau 31.

Une trame T2 du flux global d'origine comprend par exemple un paquet de synchronisation 41 (« T2-MI timestamp »), un paquet de signalisation 42 (« L1PRE »), et des paquets trames bandes de base 431, 432, 433 portant les données des flux de transport des différents tunnels. Par exemple, les trames bandes de base 431 et 433 portent les paquets d'un premier flux de transport encapsulé dans le tunnel couche physique PLP1, et la trame bande de base 432 porte les paquets d'un deuxième flux de transport encapsulé dans le tunnel couche physique PLP2.

Le flux global d'origine issu de la tête de réseau 31 est un signal de référence, qui peut être modifié localement au niveau de chaque site de diffusion par l'insertion de contenus locaux. La distribution de ce flux global d'origine est faite de manière simultanée vers tous les sites de diffusion.

Chaque dispositif de traitement d'un flux global 32, 33, 34, 35, localisé au niveau d'un site de diffusion selon cet exemple de mise en œuvre de l'invention, reçoit donc le flux global d'origine T2-MI.

Au moins un des dispositifs de traitement 32, 33, 34, 35 met en œuvre un traitement du flux global d'origine, pour en modifier le contenu. On considère selon cet exemple que le flux global d'origine encapsule deux tunnels couche physique associés chacun à un flux de transport distinct, et que l'on souhaite remplacer un service composé d'une composante vidéo et d'une composante audio du premier flux de transport. Il s'agit ici d'un exemple purement illustratif et non limitatif, un service pouvant notamment être composé de plusieurs composantes de type vidéo, audio et/ou de sous-titre, et un ou plusieurs flux de transport du flux global d'origine pouvant être modifié(s).

Par exemple, le dispositif de traitement 32 reçoit le flux global d'origine au format T2-MI, et l'analyse pour séparer les différents éléments composant le flux global d'origine : les différents tunnels couche physique (PLP1, PLP2), le paquet de signalisation (L1PRE), les paquets de synchronisation SFN (T2-MI TimeStamp).

Pour au moins un tunnel couche physique, le dispositif de traitement 32 extrait le contenu composant le PLP. Par exemple, le dispositif de traitement 32 extrait les paquets du premier flux de transport encapsulé dans le tunnel couche physique PLP1, portés par les trames bandes de base 431 et 433.

Le premier flux de transport ainsi obtenu est composé de paquets audio, de paquets vidéo, de paquets de signalisation (par exemple des tables PAT), et de paquets nuls (« null »). Il est illustré en figure 4B, et noté TS1origin, pour premier flux de transport d'origine.

Le premier flux de transport d'origine est ensuite modifié, en remplaçant au moins un contenu principal porté par ce flux par au moins un contenu secondaire.

Comme déjà indiqué, cette modification du ou des flux de transport peut être mise en œuvre par un procédé ou un équipement de remplacement de contenus/d'insertion locale, distinct du dispositif de traitement, conservant la structure du flux de transport, c'est-à-dire ne modifiant pas le nombre de paquets du flux de transport entre deux paquets de signalisation. Selon un autre mode de réalisation, cette modification du ou des flux de transport peut être mise en œuvre par le dispositif de traitement lui-même.

Un tel procédé, dispositif de traitement ou équipement de remplacement réalise l'insertion de façon déterministe.

Par exemple, un tel procédé, dispositif de traitement ou équipement de remplacement met en œuvre une technique de remplacement de contenus telle que décrite dans la demande de brevet français n°1553260 précitée, reposant sur une mise à jour particulière de différents champs du flux de transport (horloge de référence, compteurs de continuité, informations temporelles de reconstruction, etc), permettant de modifier uniquement le flux de transport, et non les flux élémentaires de type vidéo, audio ou de sous-titre. Un tel procédé met en œuvre les étapes suivantes, au niveau d'un moins un équipement de remplacement de contenus associé à au moins un des sites de diffusion :
- détermination d'un instant de décrochage vidéo et d'au moins un instant de décrochage audio ou de sous-titre, à partir d'au moins un paquet de décrochage du flux de transport d'origine,
- remplacement, dans le flux de transport d'origine :
   o d'au moins un paquet vidéo ou d'un paquet nul du contenu principal, dit paquet vidéo à remplacer, par au moins un paquet vidéo du contenu secondaire ou par un paquet nul, dit paquet vidéo de remplacement, à partir de l'instant de décrochage vidéo, et
   o d'au moins un paquet audio ou de sous-titre ou d'un paquet nul du contenu principal, dit paquet audio ou de sous-titre à remplacer, par au moins un paquet audio ou de sous-titre du contenu secondaire ou par un paquet nul, dit paquet audio ou de sous-titre de remplacement, à partir du ou des instants de décrochage audio ou de sous-titre,
   délivrant un flux de transport modifié,
- mise à jour, dans le flux de transport modifié :
   ∘ d'une horloge de référence,
   ∘ d'un compteur de continuité de paquets vidéo et d'au moins une information temporelle de reconstruction vidéo dans le ou les paquets vidéo de remplacement, et
   ∘ d'un compteur de continuité de paquets audio ou de sous-titre et d'au moins une information temporelle de reconstruction audio ou de sous-titre dans le ou les paquets audio ou de sous-titre de remplacement, tenant compte de l'information temporelle de reconstruction vidéo.

Le dispositif de traitement 32 obtient ainsi un premier flux de transport modifié, noté TS1mod, dans lequel certains paquets du premier flux de transport d'origine (paquets audio, vidéo, ou paquets nuls) ont été remplacés par d'autres paquets (paquets audio, vidéo, ou paquets nuls), correspondant par exemple à une publicité locale. Le premier flux de transport ainsi modifié est illustré en figure 4C.

Lorsque le dispositif de traitement 32 a reçu le premier flux de transport modifié TS1mod, il peut remplacer le premier flux de transport d'origine par le premier flux de transport modifié dans le tunnel couche physique PLP1. Le tunnel couche physique PLP1 encapsule donc désormais le flux de transport modifié TS1mod.

Plus précisément, on propose, selon un mode de réalisation particulier de l'invention, de mettre en mémoire tampon le flux global d'origine au moins le temps nécessaire à la modification du premier flux de transport. Par exemple, le flux global d'origine est retardé d'une durée égale au temps de traitement de l'insertion locale déterministe auquel on ajoute la période d'une trame T2. On réaligne ensuite le ou les différents flux de transport et le flux global d'origine pour compenser le temps de traitement de l'équipement réalisant la modification du flux global. Selon l'exemple présenté, on aligne au moins un paquet de référence du premier flux de transport modifié, avec au moins un paquet de référence du flux global d'origine.

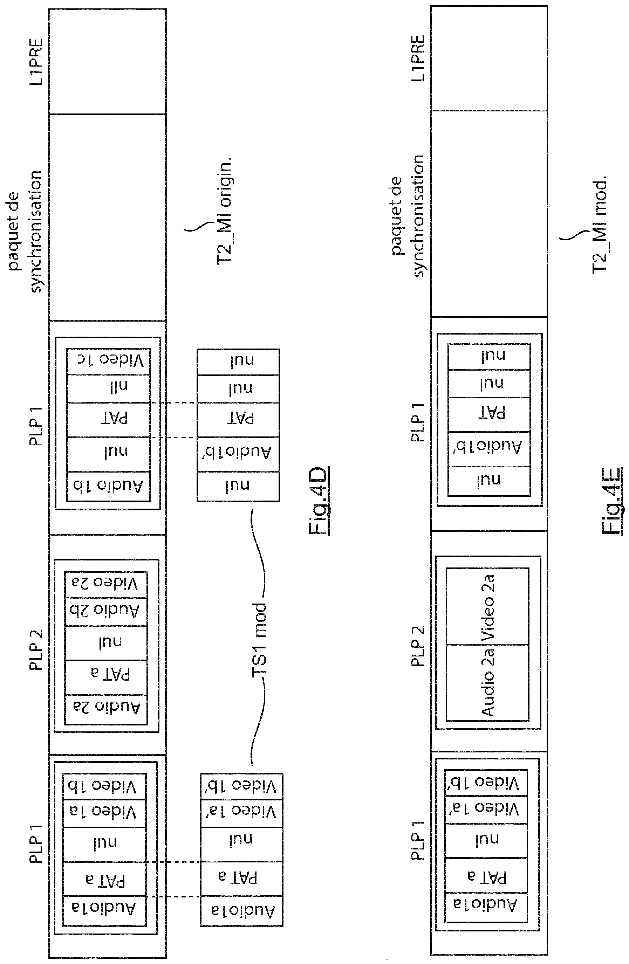

La figure 4D illustre l'alignement des paquets de référence du premier flux de transport modifié, par exemple des paquets de signalisation de type tables PAT, sur les paquets correspondant du flux global d'origine.

Le flux de transport modifié peut ensuite être réinséré de façon déterministe et identique dans les paquets T2-MI de type trame bande de base composant le tunnel couche physique correspondant. En d'autres termes, on remplace le premier flux de transport d'origine par le premier flux de transport modifié dans le tunnel couche physique PLP1, de façon à obtenir un flux global modifié, noté T2-MI mod.

La figure 4E illustre un exemple de flux global modifié obtenu selon ce mode de réalisation de l'invention.

Les champs de contrôle (CRC) des paquets T2-MI et des trames bandes de base peuvent alors être mis à jour. En particulier, on met à jour les champs de contrôle des paquets T2-MI et des trames bandes de base associées au tunnel couche physique PLP1 encapsulant le ou les flux de transport modifié(s).

Le flux global modifié, illustré en figure 4E, et le flux global d'origine, illustré en figure 4A, présentent une structure similaire. En particulier, les paquets de synchronisation 41 (« T2-MI timestamp ») et de signalisation 42 (« L1PRE ») sont identiques entre les deux flux globaux. La différence entre ces deux flux globaux repose sur le contenu porté par au moins un des flux de transport : dans le flux global d'origine, le tunnel couche physique PLP1 encapsule le premier flux de transport d'origine (i.e. portant au moins un contenu principal), alors que dans le flux global modifié, le tunnel couche physique PLP1 encapsule le premier flux de transport modifié (i.e. portant au moins un contenu secondaire).

Les champs CRC diffèrent également entre les deux flux globaux, puisqu'ils sont mis à jour pour tenir compte des modifications apportées à ou aux flux de transport.

Selon au moins un mode de réalisation, l'invention permet donc de « dupliquer » un flux de type T2-MI tout en modifiant son contenu au niveau flux de transport, en remplaçant les paquets de flux de transport encapsulés dans au moins un tunnel couche physique du flux T2-MI. En particulier, l'invention, selon au moins un mode de réalisation, permet de garantir la préservation SFN, puisque les paquets de synchronisation du flux global modifié sont identiques à ceux du flux global d'origine.

En particulier, on note qu'un contenu différent peut être inséré au niveau des différents dispositifs de traitement. Ainsi, chaque dispositif de traitement peut délivrer un flux global modifié différent, alors que le flux global d'origine est identique pour les différents dispositifs de traitement. De même, chaque tunnel couche physique du flux global d'origine est traité séparément. Ainsi, les flux de transport encapsulés dans des tunnels différents du flux global d'origine peuvent être remplacés par des flux de transport différents dans le flux global modifié.

### 5.3 Structure d'un dispositif de traitement d'un flux global

On présente finalement, en relation avec la figure 5, la structure simplifiée d'un dispositif de traitement d'un flux global mettant en œuvre le procédé de traitement d'un flux global selon le mode de réalisation particulier décrit ci-dessus.

Un tel dispositif comprend une mémoire 51, par exemple une mémoire tampon, une unité de traitement 52, équipée par exemple d'un microprocesseur ***µP***, et pilotée par le programme d'ordinateur 53, mettant en œuvre le procédé de traitement d'un flux global selon au moins un mode de réalisation de l'invention.

A l'initialisation, les instructions de code du programme d'ordinateur 53 sont par exemple chargées dans une mémoire RAM avant d'être exécutées par le processeur de l'unité de traitement 52. L'unité de traitement 52 reçoit en entrée un flux global d'origine. Le microprocesseur de l'unité de traitement 52 met en œuvre les étapes du procédé de traitement décrit précédemment, selon les instructions du programme d'ordinateur 53, pour modifier le contenu d'au moins un flux de transport encapsulé dans un tunnel couche physique du flux global d'origine. Pour cela, le dispositif de traitement d'un flux global d'origine comprend également un module de réception du flux global d'origine, et les modules suivants, activés pour au moins un tunnel couche physique du flux global d'origine, dit tunnel d'origine :
- un module d'extraction du flux de transport encapsulé dans le tunnel d'origine, dit flux de transport d'origine,
- un module d'obtention d'un flux de transport modifié, obtenu en remplaçant au moins un contenu principal porté par le flux de transport d'origine par au moins un contenu secondaire,
- un module de décalage temporel du flux global d'origine,
- un module d'alignement d'au moins un paquet de référence du flux de transport modifié avec au moins un paquet de référence du flux global d'origine obtenu après décalage temporel, et
- un module de remplacement, dans le tunnel d'origine du flux global d'origine obtenu après décalage temporel, du flux de transport d'origine par le flux de transport modifié obtenu après alignement.

Ces modules peuvent être pilotés par le microprocesseur de l'unité de traitement 52.

En particulier, on note que l'unité de traitement 52 peut également recevoir en entrée au moins un contenu secondaire à insérer dans un flux de transport du flux global d'origine, ou directement un flux de transport modifié, lorsque le dispositif de traitement coopère avec un équipement de remplacement de contenus.

## Revendications

1. Procédé de traitement d'un flux global d'origine, délivrant un flux global modifié,
ledit flux global d'origine étant émis par une tête de réseau et destiné à une pluralité de sites de diffusion, et comprenant au moins un tunnel couche physique encapsulant un flux de transport, ledit procédé mettant en œuvre les étapes suivantes :
- réception (11) dudit flux global d'origine,
- pour au moins un tunnel couche physique dudit flux global d'origine, dit tunnel d'origine :
- extraction (12) du flux de transport encapsulé dans ledit tunnel d'origine, dit flux de transport d'origine,
- obtention (13) d'un flux de transport modifié, obtenu en remplaçant au moins un contenu principal porté par ledit flux de transport d'origine par au moins un contenu secondaire,
- décalage temporel (14) dudit flux global d'origine,
- alignement (15) d'au moins un paquet de référence dudit flux de transport modifié avec au moins un paquet de référence dudit flux global d'origine obtenu après décalage temporel, et
- remplacement (16), dans le tunnel d'origine dudit flux global d'origine obtenu après décalage temporel, dudit flux de transport d'origine par ledit flux de transport modifié obtenu après alignement.

2. Procédé de traitement selon la revendication 1, **caractérisé en ce que** ledit flux global d'origine et ledit flux global modifié présentent une structure identique.

3. Procédé de traitement selon l'une quelconque des revendications 1 et 2, **caractérisé en ce que** lesdits paquets de référence sont des paquets de signalisation.

4. Procédé de traitement selon l'une quelconque des revendications 1 à 3, **caractérisé en ce qu'**il comprend une étape de mise à jour d'au moins un champ de contrôle dans ledit flux global modifié.

5. Procédé de traitement selon l'une quelconque des revendications 1 à 4, **caractérisé en ce que** ladite étape d'obtention met en œuvre la transmission dudit flux de transport d'origine à un équipement de remplacement de contenus mettant en œuvre le remplacement dudit au moins un contenu principal par ledit au moins un contenu secondaire, et la réception dudit flux de transport modifié.

6. Procédé de traitement selon l'une quelconque des revendications 1 à 4, **caractérisé en ce que** ladite étape d'obtention met en œuvre le remplacement dudit au moins un contenu principal par ledit au moins un contenu secondaire.

7. Procédé de traitement selon la revendication 5 ou la revendication 6, **caractérisé en ce que** ledit remplacement met en œuvre un remplacement d'au moins un paquet de données associées audit contenu principal par au moins un paquet de données associées audit contenu secondaire.

8. Procédé de traitement selon l'une quelconque des revendications 1 à 7, **caractérisé en ce que** ledit flux global d'origine et ledit flux global modifié sont de type T2-MI.

9. Procédé de traitement selon l'une quelconque des revendications 1 à 8, **caractérisé en ce que** lesdites étapes de réception, extraction, obtention, décalage temporel, alignement et remplacement sont mises en œuvre au niveau d'un desdits sites de diffusion.

10. Dispositif de traitement d'un flux global d'origine, délivrant un flux global modifié,
ledit flux global d'origine étant émis par une tête de réseau et destiné à une pluralité de sites de diffusion, et comprenant au moins un tunnel couche physique encapsulant un flux de transport, ledit dispositif comprenant:
- un module de réception dudit flux global d'origine,
- pour au moins un tunnel couche physique dudit flux global d'origine, dit tunnel d'origine :
- un module d'extraction du flux de transport encapsulé dans ledit tunnel d'origine, dit flux de transport d'origine,
- un module d'obtention d'un flux de transport modifié, obtenu en remplaçant au moins un contenu principal porté par ledit flux de transport d'origine par au moins un contenu secondaire,
- un module de décalage temporel dudit flux global d'origine,
- un module d'alignement d'au moins un paquet de référence dudit flux de transport modifié avec au moins un paquet de référence dudit flux global d'origine obtenu après décalage temporel, et
- un module de remplacement, dans le tunnel d'origine dudit flux global d'origine obtenu après décalage temporel, dudit flux de transport d'origine par ledit flux de transport modifié obtenu après alignement.

11. Programme d'ordinateur comportant des instructions pour la mise en œuvre d'un procédé de traitement selon la revendication 1 lorsque ce programme est exécuté par un processeur.

## Patentansprüche

1. Verfahren zur Verarbeitung eines globalen Originaldatenstroms, das einen globalen geänderten Datenstrom bereitstellt, wobei der globale Originaldatenstrom von einer Kopfstelle ausgegeben wird und für eine Vielzahl von Verbreitungssites bestimmt ist und mindestens einen Tunnel auf physikalischer Ebene umfasst, der einen Transportdatenstrom verkapselt, wobei das Verfahren die folgenden Schritte durchführt:
- Empfangen (11) des globalen Originaldatenstroms,
- für mindestens einen Tunnel auf physikalischer Ebene des globalen Originaldatenstroms, bezeichnet als Originaltunnel:
- Extraktion (12) des im Originaltunnel verkapselten Transportdatenstroms, bezeichnet als Originaltransportdatenstrom,
- Erhalten (13) eines geänderten Transportdatenstroms, erhalten durch Ersetzen mindestens eines von dem Originaltransportdatenstrom getragenen Hauptcontents durch mindestens einen sekundären Content,
- zeitliches Versetzen (14) des globalen Originaldatenstroms,
- Ausrichten (15) von mindestens einem Referenzpaket des geänderten Transportdatenstroms mit mindestens einem Referenzpaket des nach zeitlichem Versatz erhaltenen globalen Originaldatenstroms, und
- Ersetzen (16), im Originaltunnel des nach zeitlichem Versatz erhaltenen globalen Originaldatenstroms, des Originaltransportdatenstroms durch den nach Ausrichtung erhaltenen geänderten Transportdatenstrom.

2. Verarbeitungsverfahren nach Anspruch 1, **dadurch gekennzeichnet, dass** der globale Originaldatenstrom und der globale geänderte Datenstrom eine identische Struktur aufweisen.

3. Verarbeitungsverfahren nach einem der Ansprüche 1 und 2, **dadurch gekennzeichnet, dass** die Referenzpakete Signalisierungspakete sind.

4. Verarbeitungsverfahren nach einem der Ansprüche 1 bis 3, **dadurch gekennzeichnet, dass** es einen Aktualisierungsschritt von mindestens einem Kontrollfeld im globalen geänderten Datenstrom umfasst.

5. Verarbeitungsverfahren nach einem der Ansprüche 1 bis 4, **dadurch gekennzeichnet, dass** der Schritt des Erhaltens die Übertragung des Originaltransportdatenstroms an eine Contentersatzausrüstung durchführt, die den Ersatz des mindestens einen Hauptcontents durch den mindestens einen sekundären Content durchführt, und den Empfang des geänderten Transportdatenstroms.

6. Verarbeitungsverfahren nach einem der Ansprüche 1 bis 4, **dadurch gekennzeichnet, dass** der Schritt des Erhaltens den Ersatz des mindestens einen Hauptcontents durch den mindestens einen sekundären Content durchführt.

7. Verarbeitungsverfahren nach Anspruch 5 oder Anspruch 6, **dadurch gekennzeichnet, dass** das Ersetzen einen Ersatz von mindestens einem Paket von Daten, die dem Hauptcontent zugeordnet sind, durch mindestens ein Paket von Daten, die dem sekundären Content zugeordnet sind, durchführt.

8. Verarbeitungsverfahren nach einem der Ansprüche 1 bis 7, **dadurch gekennzeichnet, dass** der globale Originaldatenstrom und der globale geänderte Datenstrom vom Typ T2-MI sind.

9. Verarbeitungsverfahren nach einem der Ansprüche 1 bis 8, **dadurch gekennzeichnet, dass** die Schritte des Empfangens, Extrahierens, Erhaltens, zeitlichen Versetzens, Ausrichtens und Ersetzens im Bereich von einer der Verbreitungssites durchgeführt werden.

10. Vorrichtung zur Verarbeitung eines globalen Originaldatenstroms, die einen globalen geänderten Datenstrom bereitstellt, wobei der globale Originaldatenstrom von einer Kopfstelle ausgegeben wird und für eine Vielzahl von Verbreitungssites bestimmt ist und mindestens einen Tunnel auf physikalischer Ebene umfasst, der einen Transportdatenstrom verkapselt, wobei die Vorrichtung umfasst:
- ein Modul zum Empfangen des globalen Originaldatenstroms,
- für mindestens einen Tunnel auf physikalischer Ebene des globalen Originaldatenstroms, bezeichnet als Originaltunnel:
- ein Modul zum Extrahieren des im Originaltunnel verkapselten Transportdatenstroms, bezeichnet als Originaltransportdatenstrom,
- ein Modul zum Erhalten eines geänderten Transportdatenstroms, erhalten durch Ersetzen mindestens eines von dem Originaltransportdatenstrom getragenen Hauptcontents durch mindestens einen sekundären Content,
- ein Modul zum zeitlichen Versetzen des globalen Originaldatenstroms,
- ein Modul zum Ausrichten von mindestens einem Referenzpaket des geänderten Transportdatenstroms mit mindestens einem Referenzpaket des nach zeitlichem Versatz erhaltenen globalen Originaldatenstroms, und
- ein Modul zum Ersetzen, im Originaltunnel des nach zeitlichem Versatz erhaltenen globalen Originaldatenstroms, des Originaltransportdatenstroms durch den nach Ausrichtung erhaltenen geänderten Transportdatenstrom.

11. Rechnerprogramm, aufweisend Befehle zur Durchführung eines Verarbeitungsverfahrens nach Anspruch 1, wenn dieses Programm von einem Prozessor ausgeführt wird.

## Claims

1. A method for processing an original total stream delivering a modified total stream,
said original total stream being sent out by a head-end and addressed to a plurality of broadcasting sites, and comprising at least one physical layer pipe encapsulating a transport stream,
said method comprising the following steps:
- receiving (11) said original total stream,
- for at least one physical layer pipe of the original total stream, called an original pipe:
- extracting (12) the transport stream encapsulated in said original pipe, called an original transport stream,
- obtaining (13) a modified transport stream obtained by replacing at least one main content carried by said original transport stream by at least one secondary content,
- time-shifting (14) said original total stream,
- aligning (15) at least one reference packet of said modified transport stream with at least one reference packet of said original total stream obtained after the time-shifting, and
- replacing (16), in the original pipe of said original total stream obtained after the time-shifting, said original transport stream by said modified transport stream obtained after the aligning.

2. The method for processing according to claim 1, **characterized in that** said original total stream and said modified total stream have an identical structure.

3. The method for processing according to any one of claims 1 and 2, **characterized in that** said reference packets are signaling packets.

4. The method for processing according to any one of claims 1 to 3, further comprising a step for updating at least one check field in said modified total stream.

5. The method for processing according to any one of claims 1 to 4, **characterized in that** the step for obtaining implements transmission of said original transport stream to a piece of equipment for replacing contents implementing the replacement of said at least one main content by said at least one secondary content, and reception of said modified transport stream.

6. The method for processing according to any one of claims 1 to 4, **characterized in that** the step for obtaining implements replacement of said at least one main content by said at least one secondary content.

7. The method for processing according to claim 5 or claim 6, **characterized in that** said step of replacement implements a replacement of at least one data packet associated with said main content by at least one data packet associated with said secondary content.

8. The method for processing according to any one of claims 1 to 7, **characterized in that** said original total stream and said modified total stream are of a T2-MI type.

9. The method for processing according to any one of claims 1 to 8, **characterized in that** the steps of receiving, extracting, obtaining, time-shifting, aligning and replacing are implemented in one of said broadcasting sites.

10. A device for processing an original total stream delivering a modified total stream,
said original total stream being sent out by a head-end and being addressed to a plurality of broadcasting sites, and comprising at least one physical layer pipe encapsulating a transport stream, said device comprising:
- a module for receiving the original total steam,
- for at least one physical layer pipe of said original total stream, called an original pipe:
- a module for extracting the transport stream encapsulated in said original pipe, called an original transport stream,
- a module for obtaining a modified transport stream obtained by replacing at least one main content carried by said original transport stream by at least one secondary content,
- a module for time-shifting said original total stream,
- a module for aligning at least one reference packet of said modified transport stream with at least one reference packet of said original total stream obtained after the time-shifting, and
- a module for replacing, in the original pipe of said original total stream obtained after the time-shifting, said original transport stream by said modified transport stream obtained after alignment.

11. Computer program comprising instructions for implementing a method for processing according to claim 1 when this program is executed by a processor.
